# FASCICULE DE BREVET EUROPEEN

(11) **EP 2 312 373 B1**
(45) Date de publication et mention de la délivrance du brevet: **04.04.2018**
(21) Numéro de dépôt: 10186351.2
(22) Date de dépôt: 04.10.2010
(51) Int. Cl.: G02B 27/01

(54) **Equipement de vision comportant une lame optique à coefficient de transmission lumineuse commandée**
Anzeigegerät mit optischem Fenster mit einstellbarer Transmission
Optical display device comprising a window having a controllable variable transmittance

(30) Priorité: 06.10.2009 FR 0904769
(43) Date de publication de la demande: 20.04.2011
(73) Titulaire: France Brevets, 75009 Paris (FR)
(72) Inventeur: Baudou, Joël, 33160 SAINT MEDARD EN JALLES (FR); Laluque, Laurent, 33000 BORDEAUX (FR); Francois, Jean-Michel, 33140 CADAUJAC (FR)
(74) Mandataire: Esselin, Sophie

(56) Documents cités:
- EP-A2- 1 158 336
- WO-A2-01/16640
- WO-A2-2008/109231
- US-A1- 2007 139 792

## Description

Le domaine de l'invention concerne les équipements de vision à réalité augmentée notamment dans le domaine de l'aéronautique pour les viseurs de casque.

Lors de mission de vol, un pilote d'aéronef doit surveiller son environnement de vol tout en assurant les tâches de pilotage, de navigation et de réalisation de sa mission. La tâche du pilote devient particulièrement complexe lors des phases de vol à basse altitude pour surveiller les obstacles et le terrain et dans le cas de mission tactique pour la surveillance d'objets mobiles. Il est alors courant d'assister le pilote dans l'exécution de ses fonctions de pilotage avec des systèmes de réalité augmentée. En effet, il existe par exemple des équipements de vision venant agrémenter en temps réel la perception visuelle du pilote avec des informations synthétiques. On connaît les équipements d'affichage tête haute permettant de superposer des informations de pilotage et de navigation aux images réelles du champ visuel du pilote. Ces systèmes consistent à disposer dans le champ visuel du pilote une lame optique transparente et semi-réfléchissante sur laquelle sont projetées des images collimatées à l'infini. Cette lame optique transparente peut être un miroir monté sur le cockpit d'un aéronef ou, le cas échéant, la visière du casque du pilote.

L'utilisation des équipements de vision à l'intérieur d'un cockpit est problématique pour plusieurs raisons. Tout d'abord, ces équipements sont utilisés lors de mission de jour et de nuit. Il en résulte donc que le niveau de luminosité varie fortement et même régulièrement lorsque le temps est nuageux. La visibilité des informations présentées par temps clair nécessite une image de forte luminosité et pour cela, dans le cas d'équipements de vision de casque, on utilise généralement une visière solaire de transmission uniforme voisine de quinze pourcent. Il existe également des visières interchangeables avec une transmission plus élevée adaptée aux mauvaises conditions de visibilité diurnes. Cependant, lorsque le pilote baisse la tête pour voir les informations sur le tableau de bord, il lui faut alors relever la visière solaire pour ne pas dégrader la vision des écrans multifonctions. De même, lors d'un vol tactique, le pilote est amené à regarder vers le ciel lumineux, puis vers le sol où des zones sont à l'ombre du soleil. Il lui faut alors manipuler fréquemment et rapidement sa visière.

Il existe également des systèmes de vision couplés avec des caméras thermiques venant superposer à l'image du paysage une image vidéo. Ces systèmes permettent d'augmenter la vision du terrain en cas d'atterrissage par mauvaises conditions de visibilité dues au brouillard, à la poussière, etc.... La visibilité de cette image de jour nécessite un fort contraste que l'abaissement d'une visière solaire ne traite pas correctement car sa présence atténue également la visibilité résiduelle du paysage.

Pour assister le pilote, on connaît également des systèmes de vision de nuit intégré avec un viseur de casque à projection sur visière. L'image de nuit se superpose à l'image du paysage vue au travers de la visière. Dans de tels systèmes, l'objectif de prise de vue de l'image nuit est déporté des yeux pour libérer la vue du paysage. Il en résulte une vision stéréoscopique différente de la vision stéréoscopique naturelle. A courte distance, cette vision stéréoscopique se traduit par une non-superposition de l'image nuit avec l'image naturelle avec pour conséquence une vision triple (image réelle, image nuit gauche et image nuit droite ou image nuit, image réelle droite et image réelle gauche), la fusion ou convergence se faisant habituellement sur l'image la plus lumineuse. Ces images triples peuvent perturber le pilote notamment lorsque la scène comporte des points lumineux comme par exemple en environnement urbain ou sur la piste d'atterrissage. Dans ces conditions, il est intéressant de pouvoir masquer la vision directe et privilégier la vision de nuit. Une solution est par exemple l'utilisation d'une visière supplémentaire partiellement opaque. La partie opaque de la visière supplémentaire se place devant l'image binoculaire pour augmenter son contraste et laisse libre le champ visuel latéral pour conserver une bonne perception de l'environnement. Cette visière doit pouvoir se retirer rapidement pour des raisons de sécurité. Cependant, cette solution n'est pas satisfaisante pour les mêmes raisons précitées. La publication internationale WO 2008/109231 divulgue un élément optique de combineur pour affichage tête haute à transmission réglable. La publication US 2007/0139792 divulgue un diaphragme permettant une apodisation variable. L'objectif de l'invention est de palier les problèmes précités en fournissant une solution technique améliorant la qualité d'affichage des équipements de vision à réalité augmentée.

Plus précisément, l'invention est un équipement de vision comportant les caractéristiques du dispositif défini dans la revendication 1. Les revendications dépendantes définissent des modes de réalisation additionnels. L'équipement de vision selon l'invention améliore la qualité d'affichage des images par une gestion automatique du contraste en fonction des conditions d'utilisation (luminosité ambiante, orientation du regard de l'utilisateur). De plus, le contrôle indépendant du coefficient de transmission lumineuse de chaque zone de champ permet des fonctionnalités additionnelles de la surface d'affichage. Par exemple, la zone supérieure de la lame optique est utilisée comme pare-soleil en commandant le coefficient de transmission lumineuse à un faible niveau en cas de forte luminosité et la zone de projection d'image peut être rendue quasiment opaque pour proposer une vue dans la zone de champ directe uniquement par vision thermique tout en laissant une visibilité sur la zone périphérique extérieure. Dans le cas d'un casque pour pilote d'aéronef, l'équipement de vision améliore le confort d'utilisation et la sécurité du vol en déchargeant le pilote de la tâche de mise en place et de retrait de la visière solaire. Le casque est également allégé de la masse de la visière solaire qui ne présente alors plus d'utilité.

L'invention sera mieux comprise et d'autres avantages apparaîtront à la lecture de la description qui va suivre donnée à titre non limitatif et grâce aux figures annexées parmi lesquelles :
La figure 1 illustre le principe général du système de vision à réalité augmentée.
La figure 2 représente une vue latérale d'un premier mode de réalisation d'un équipement de vision de casque avec une technologie de matériau photochrome et un système de projection de rayons ultraviolets.
La figure 3 représente la visière de casque pour le mode de réalisation avec une technologie de matériau photochrome et les zones de projections des rayons ultraviolets sur la surface de la visière.
La figure 4 représente un second mode de réalisation d'un équipement de vision de casque avec une technologie de matériau électrochrome.

L'invention est un équipement de vision permettant de superposer des informations synthétiques aux images réelles perçues par l'utilisateur et de contrôler automatiquement la transmission lumineuse de plusieurs zones de la lame optique sur laquelle sont affichées ces informations afin d'améliorer la qualité d'affichage et le confort d'utilisation de l'équipement.

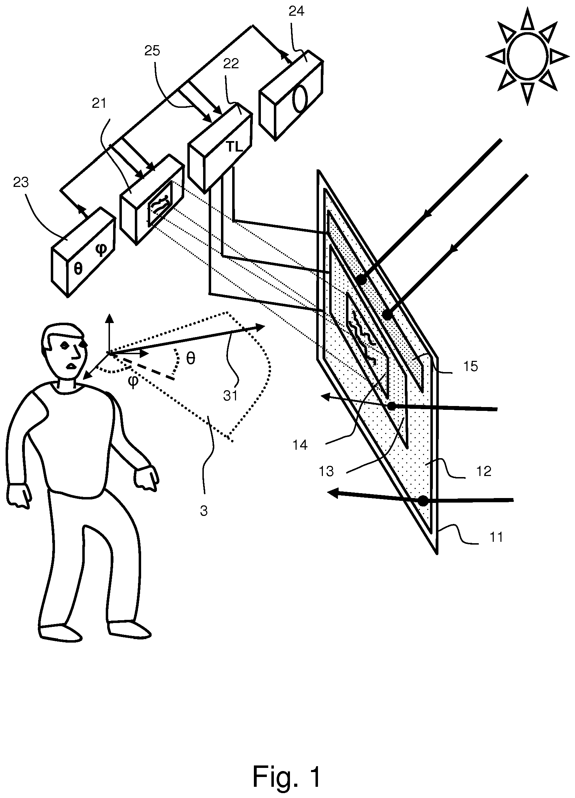

La figure 1 représente un équipement de vision générique pour illustrer les fonctions remplies par l'invention. L'équipement de vision comporte une lame optique 11 située dans le champ visuel 3 de l'utilisateur sur laquelle plusieurs zones de champ 12, 13 et 15 sont délimitées par la présence d'une couche de matériau à transmission lumineuse variable. Selon un mode de réalisation élémentaire, la lame optique comprend au moins deux zones de champ, une première zone 13 couvrant au moins une zone de projection d'informations 14 et une seconde zone 12 en périphérie de la première zone 13 couvrant préférentiellement le champ visuel 3 de l'utilisateur. Les informations affichées dans la zone 14 sont issues d'un dispositif de projection d'images 21. Dans des modes de réalisation plus perfectionnés, la lame optique présente une ou plusieurs zones de champs supplémentaires dédiées à des fonctions additionnelles de l'équipement de vision. Par exemple, la zone de champ 15 couvre la partie supérieure de la zone périphérique 12 afin de protéger l'utilisateur des rayons solaires.

Les zones 12, 13 et 15 de la lame optique 11 sont couvertes d'une couche du matériau à coefficient de transmission lumineuse variable. On peut citer plusieurs technologies de matériau pouvant être utilisées : des matériaux photochromes, des matériaux électrochromes ou également des films à cristal liquide. Le coefficient de transmission lumineuse de chaque zone 12, 13 et 15 est contrôlé indépendamment pour chacune des zones par un moyen de commande 22. Selon la technologie de matériau à coefficient de transmission lumineuse utilisée, le mode de réalisation du moyen de commande peut varier. Le moyen de commande 22 reçoit des informations d'état 25 et commande le coefficient de transmission lumineuse de chacune des zones 12, 13 et 15. Ces informations d'états sont générées par un ou plusieurs moyens de calcul 23 et 24.

Le moyen de calcul 24 détermine par exemple le niveau de luminosité de l'environnement d'utilisation de l'équipement de vision pour adapter le contraste de la zone de projection d'image 14 selon la luminosité ambiante. En cas de forte luminosité, le moyen de commande contrôle la zone de champ 15 de façon à réduire la transmission lumineuse au maximum afin de protéger l'utilisateur des rayons lumineux. La zone de champ périphérique 12 en conditions de jour ordinaires est généralement commandée à un niveau de transmission lumineuse élevé afin de laisser à l'utilisateur la perception de l'environnement extérieur. Cependant, en cas de forte luminosité on recherchera à diminuer la transmission lumineuse. La zone de champ 13 couvrant la zone de projection d'images est généralement à un niveau de transmission lumineuse inférieure pour améliorer la qualité d'affichage des images devant être superposées au paysage observé. Les niveaux de transmission lumineuse sont adaptés en fonction de l'application utilisée sur la lame optique 11. Les niveaux recherchés varient selon qu'on utilise une application de projection d'informations synthétiques ou de projection d'images vidéo. Le moyen de calcul 23 est capable de déterminer les angles ϕ et θ définissant la direction du regard 31 de l'utilisateur. Ces informations d'état sont utiles pour contrôler la transmission lumineuse des zones en fonction de la zone observée par l'utilisateur.

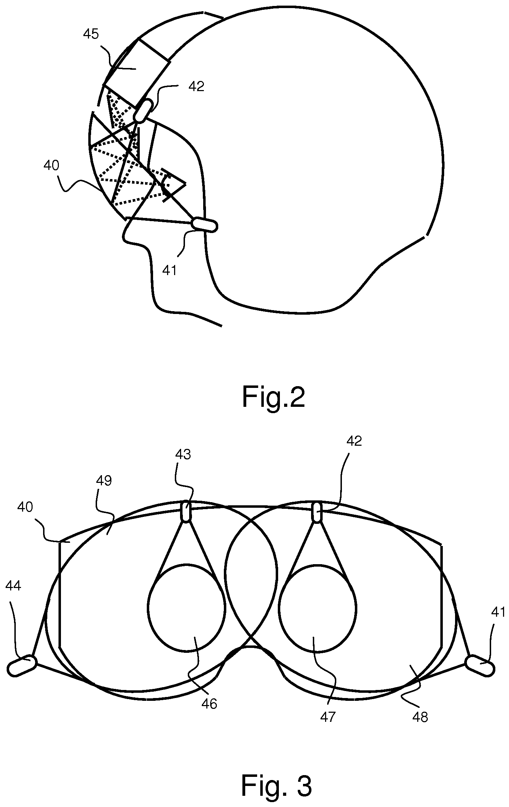

Les figures 2 et 3 représentent un premier mode de réalisation de l'équipement de vision pour un visuel de casque de pilote d'aéronef. Selon ce mode de réalisation, la visière 40 du casque du pilote est utilisée comme zone de projection d'images générées par un dispositif de projection d'images 45 à collimation positionné sur la partie frontale supérieure de la coque du casque. La visière 40 comporte généralement sur la surface intérieure, celle du côté du porteur du casque, une couche semi-réfléchissante permettant de rendre visible au porteur les images projetées sur la visière. La couche de matériau à transmission lumineuse variable est un matériau de type photochrome et est déposée sur une surface de la visière recouvrant totalement ou partiellement la surface de la visière. Dans le cas où le casque comporte deux visières, la couche de matériau photochrome peut être déposée sur une quelconque des deux visières. Dans ce cas, la lame optique comportant la couche de matériau photochrome est distincte de la lame optique sur laquelle est projetée l'image.

Un système de diodes électroluminescentes (LED pour « Light-Emitting Diode » en langage anglo-saxon) à rayons ultraviolets (UV) 41, 42, 43, 44 est utilisé comme moyen de commande du coefficient de transmission lumineuse de la couche de matériau photochrome. Les rayons UV présentent des propriétés faisant réagir le matériau photochrome et notamment faisant varier le niveau de transmission lumineuse de la couche de matériau photochrome selon la puissance de rayons UV projetée. Ainsi, la combinaison de la couche de matériau photochrome et du système de LED à rayons UV permet d'obtenir une visière à transmission lumineuse commandée. Les LED UV sont disposées sur le casque en plusieurs positions de façon à projeter les rayons UV sur plusieurs zones de la surface intérieure de la visière.

La couche de matériau photochrome est préférentiellement déposée sur la surface intérieure de la visière 40 entre la lame optique de la visière et la couche semi réfléchissante. De cette façon, la luminosité de l'image n'est pas atténuée par la couche de matériau photochrome. La couche semi réfléchissante utilisée doit alors présenter des capacités de transmission des rayons UV suffisantes. Il est également possible de déposer la couche de matériau photochrome sur la surface extérieure de la visière et également de disposer les diodes électroluminescentes du côté extérieur de la visière.

Les LED UV peuvent être multiples pour uniformiser la transmission et des moyens de contrôle optique sont de préférence ajoutés pour délimiter les zones de champs sur la visière dont le coefficient de transmission lumineuse est à contrôler. Les LED sont disposées de manière à éclairer la visière en totalité ou partiellement et des zones peuvent être délimitées en plaçant une optique et un diaphragme entre la LED et la visière. Pour homogénéiser la transmission ou la réaction du matériau photochrome, un diffuseur peut être placé devant la LED. Le matériau photochrome réactif aux rayons UV absorbe les rayons UV et ne réfléchit que très faiblement le rayonnement UV. Un filtre à bande étroite peut être placé devant la LED UV pour l'adapter au matériau photochrome de telle manière à ne travailler que dans la bande de fréquence où le matériau photochrome absorbe le plus. L'énergie nécessaire à la réaction est faible (moins de 1 mW/cm²), le rayonnement réfléchi vers le visage est donc négligeable et sans danger. Les LED UV sont commandées par un interrupteur d'activation et un potentiomètre de niveau.

La figure 3 montre plus précisément les délimitations des zones de champ de la visière pour lesquelles la transmission lumineuse est commandée. Ces zones sont délimitées par les zones de projections des rayons UV, des moyens optiques permettant d'améliorer la précision des délimitations et de définir la position des dites zones. Les LED 42 et 43 couvrent deux zones de champ 46 et 47 dédiées à la projection d'images. Les LED 41 et 44 couvre également les deux zones de champ. Le niveau de transmission lumineuse des zones 46 et 47 est ainsi commandé par la somme des énergies de rayonnement des rayons UV issus des quatre LED 41 à 44. Par exemple, la zone de projection d'image 46 est couverte par la projection de rayons UV issus des deux LED 43 et 44. Les LED 42 et 43 permettent de distinguer le niveau de transmission lumineuse des zones de projection d'images 46 et 47 des zones de champ périphérique 48 et 49. La surface de projection des LED 41 et 44 est plus large et recouvre totalement ou partiellement la visière 40. Il est possible de délimiter une pluralité de zones à transmission lumineuse commandée au moyen d'un système de plusieurs LED, des zones de projections de rayons UV pouvant se combiner ou non.

Le coefficient de transmission lumineuse du matériau photochrome réagit en fonction de l'énergie rayonnée par le système de LED UV et par conséquent peut être commandé de façon linéaire et continue sur la gamme de transmission du matériau.

L'utilisation d'un matériau du type photochrome sur la visière présente l'avantage de ne pas avoir à mettre en place des connexions électriques entre la visière et le moyen de commande dédié au contrôle du coefficient de transmission lumineuse de chaque zone de champ.

Un matériau de type sol-gel est déposé sur la visière dans le cadre de ce mode de réalisation de l'équipement de vision. Le type de matériau photochrome ne limite pas la portée de l'invention. Plus généralement, l'invention s'applique à tout type de matériau réactif à une excitation lumineuse et au moyen de commande pouvant générer cette excitation lumineuse. En effet, selon la plage de longueur d'onde à laquelle la cellule photochrome déposée sur la visière est sensible, le moyen d'activation de la réaction photochrome comprend des moyens de génération d'excitations lumineuses dans la plage de longueur d'onde choisie.

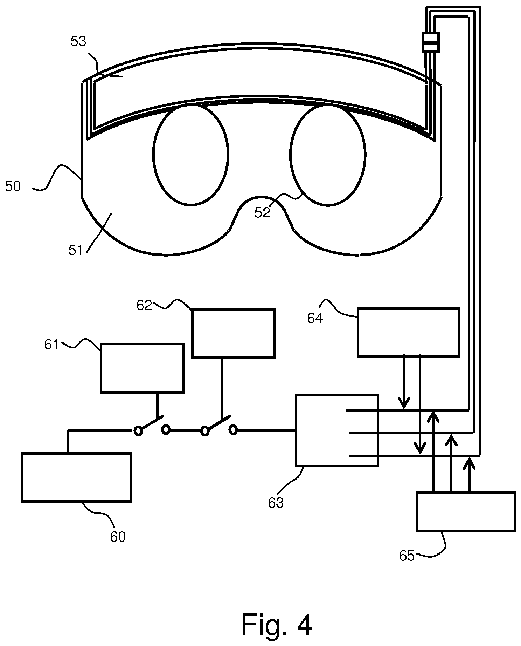

La figure 4 représente un second mode de réalisation pour un équipement de vision de casque de pilote d'aéronef. Selon ce mode de réalisation, la visière 50 du casque du pilote est utilisée comme zone de projection d'images générées par un dispositif de projection d'images à collimation positionné sur la partie frontale supérieure de la coque du casque. La visière 50 comporte généralement sur la surface intérieure, celle du côté du porteur du casque, une couche semi-réfléchissante permettant de rendre visible au porteur les images projetées sur la visière. Le matériau électrochrome est déposé sur la surface de la visière derrière la couche semi-réfléchissante par rapport à l'utilisateur. Un matériau électrochrome présente des propriétés permettant de commander son coefficient de transmission lumineuse par application d'une charge électrique sur le matériau.

Les zones de projection d'images sont définies par les zones de champ 52 centrée sur la visière et sont couvertes du matériau électrochrome. La zone de champ 51 est périphérique aux zones de champ 52 est également couverte du matériau électrochrome. La visière 50 comporte également une zone de champ 53 qui est à la partie supérieure de la zone périphérique 51 dédiée à la protection aux rayons solaires permettant d'empêcher l'éblouissement du porteur. Le coefficient de transmission lumineuse de chacune des zones 51, 52 et 53 est contrôlé par un courant électrique et la charge électrique appliquée à une zone peut être contrôlée indépendamment par rapport aux autres. Pour cela, la visière comprend un circuit de connexions électriques reliant chacune des zones de champ de la visière à un moyen de commande 63. Les zones de champs de la visière sont délimitées par le réseau de connexions électriques. Ce moyen de commande 63 est capable de calculer des niveaux de tension électrique en fonction d'informations d'états telles que le niveau de luminosité, la position de l'utilisateur, le type d'image affichée etc....

Le coefficient de transmission lumineuse varie en fonction de la différence de potentiel appliqué au matériau et peut donc être commandé de façon linéaire et continue sur une gamme de transmission donnée selon le matériau utilisé. Pour certain matériau, la gamme de transmission est comprise entre 5% et 70% dans le domaine visible. Par exemple, le tableau suivant illustre une loi de commande des coefficients de transmission des zones 51, 52 et 53 en fonction des situations de luminosité et de type d'images affichées. La loi de commande est également applicable avec la visière à matériau photochrome et le moyen de commande à rayons UV.

Le niveau de tension électrique appliqué à chaque zone 51, 52 et 53 peut également être commandé par des potentiomètres 65 et des capteurs photorésistances 64. Par exemple, le coefficient de transmission lumineuse des zones 51 et 53 varie automatiquement en fonction de la luminosité ambiante. Le moyen de commande peut être asservi à un dispositif de détection de posture 62 et être activé par un interrupteur général 61. Le moyen de commande 63 est alimenté par le dispositif d'alimentation 60 du viseur de casque.

| Mode d'affichage sélectionné | Transmission zone 53 | Transmission zone 52 | Transmission zone 51 |
|---|---|---|---|
| Vidéo de jour | 70% | 15% | 100% |
| Vidéo de nuit | 100% | 100% | 100% |
| Vision de nuit | 100% | 100% | 100% |
| Vision de nuit milieu urbain | 100% | 1 5% ou 0% | 100% |
| Symbologie de jour + visière solaire | 15% | 25% | 25% |
| Symbologie jour, nuages | 25% | 75% | 75% |

Selon l'un quelconque des modes de réalisation tels que décrits précédemment, l'équipement de vision du casque est connecté à un système d'acquisition d'image par caméra thermique afin de superposer une image vidéo aux images réelles. Le contrôle du coefficient de transmission lumineuse de la zone de projection d'image indépendamment de la zone de champ périphérique permet de masquer la scène réelle uniquement dans la zone de projection d'image et de laisser visible la zone de champ périphérique. Ainsi le pilote n'est pas perturbé par une vision triple et garde une visibilité sur le paysage extérieur.

Selon l'un quelconque des modes de réalisation tels que décrits précédemment, le dispositif de projection d'image est connecté avec un dispositif de détection de posture du pilote. Un dispositif de détection de posture calcule des informations d'état permettant de déterminer l'orientation du regard du pilote. Dans un mode de réalisation perfectionné de l'équipement de vision, le moyen de commande de la transmission lumineuse est connecté au dispositif de détection de posture du pilote afin de pouvoir adapter la transmission lumineuse de la visière selon que le pilote dirige son regard vers le paysage ou vers la planche de bord par exemple. Ainsi lorsque l'occultation de la scène réelle ou le mode protection solaire sont activés, ils seront automatiquement désactivés lorsque le pilote regarde dans la direction de la planche de bord ou à l'intérieur du cockpit. Le moyen de commande est également connecté à un capteur de luminosité permettant d'adapter automatiquement la transmission lumineuse des zones de champ de la visière.

La surface des visières de casque comprend généralement au moins deux zones à rayon de courbure différent correspondant aux zones vues par chaque oeil du pilote. Le matériau à coefficient de transmission lumineuse variable couvre au moins les dites zones à courbure distincte. La visière est également constituée d'un matériau organique de type plastique.

Un autre mode de réalisation de l'équipement de vision peut également être une visière sur laquelle est déposé un film à cristal liquide pour contrôler le coefficient de transmission lumineuse de la visière. Les moyens de commandes associés sont également montés sur le casque.

L'équipement de vision se destine particulièrement aux casques de pilote d'aéronef comprenant un dispositif de visée de casque. Plus généralement, l'équipement de vision selon l'invention peut s'appliquer aux afficheurs tête-haute mais également au domaine automobile pour les équipements électroniques d'assistance à la conduite.

## Revendications

1. Casque comprenant une lame optique translucide (11) couvrant tout ou une partie du champ visuel (3) de l'utilisateur dudit équipement, la lame étant une visière, et un dispositif de projection d'images (21) sur la dite lame dans au moins une zone du champ visuel (14) de l'utilisateur appelée zone de projection d'images, la lame optique comporte une pluralité de zones (12, 13, 15) couvertes par une couche de matériau à coefficient de transmission lumineuse commandée de type photochrome, une zone au moins couvrant la zone de projection d'images (14), **caractérisé en ce que** l'équipement de vision comporte également un moyen de commande (22) du coefficient de transmission lumineuse comprenant un moyen d'activation de la réaction photochrome sur au moins une zone de la lame optique (46) pour contrôler le coefficient de transmission lumineuse de la zone apte à recevoir des informations d'état (25) et à contrôler le coefficient de transmission lumineuse de chacune des zones (12, 13, 15) et indépendamment l'une des autres en fonction des dites informations d'état, dans lequel le moyen d'activation de la réaction photochrome est un système de projection de rayons ultraviolets (41, 42, 43, 44), comportant une pluralité de diodes électroluminescentes à rayons ultraviolets (41, 42, 43, 44) et des moyens de contrôle optique pour délimiter les zones de projections de rayons ultraviolets et pour contrôler les temps d'exposition aux rayons ultraviolets desdites zones, les diodes électroluminescentes à rayons ultraviolets étant montées sur le casque.

2. Casque selon la revendication 1, dans lequel les diodes électroluminescentes sont montées sur la coque.

3. Casque selon l'une quelconque des revendications précédentes, **caractérisé en ce qu'**il comporte également un dispositif de détection de posture (23) de l'utilisateur calculant des informations d'état relatives à la direction du regard (31) de l'utilisateur de sorte à les transmettre au moyen de commande (22) pour contrôler le coefficient de transmission lumineuse d'au moins la zone de projection (14) en fonction de la direction de regard (31) de l'utilisateur.

4. Casque selon l'une quelconque des revendications précédentes, **caractérisé en ce qu'**il comporte également un dispositif de contrôle manuel calculant des informations d'état relatives à des niveaux de transmission lumineuse de sorte à les transmettre au moyen de commande (22) pour contrôler le coefficient de transmission lumineuse d'au moins la zone de projection en fonction d'un niveau voulu.

5. Casque selon l'une quelconque des revendications précédentes, **caractérisé en ce qu'**il comporte également un composant photosensible (24) déterminant des informations d'état relatives au niveau de luminosité de l'espace autour de la lame optique de sorte à les transmettre au moyen de commande (22) pour contrôler le coefficient de transmission lumineuse d'au moins la zone de projection en fonction du niveau de luminosité.

## Patentansprüche

1. Helm, umfassend einen lichtdurchlässigen optischen Streifen (11), der das Blickfeld (3) des Benutzers der Ausrüstung ganz oder teilweise bedeckt, wobei der Streifen ein Visier ist, und eine Vorrichtung (21) zum Projizieren von Bildern auf den Streifen in wenigstens einer Zone (14), Bildprojektionszone genannt, des Blickfeldes des Benutzers, wobei der optische Streifen mehrere Zonen (12, 13, 15) umfasst, die von einer Materialschicht mit einem geregelten Lichttransmissionskoeffizienten des fotochromen Typs bedeckt ist, wobei eine Zone wenigstens die Bildprojektionszone (14) bedeckt, **dadurch gekennzeichnet, dass** die Sichtausrüstung ferner Mittel (22) zum Regeln des Lichttransmissionskoeffizienten umfasst, umfassend ein Mittel zum Aktivieren der fotochromen Reaktion auf wenigstens einer Zone (46) des optischen Streifens zum Regeln des Lichttransmissionskoeffizienten der Zone, die Zustandsinformationen (25) empfangen kann, und zum Regeln des Lichttransmissionskoeffizienten jeder der Zonen (12, 13, 15) und unabhängig voneinander in Abhängigkeit von den Zustandsinformationen, wobei das Mittel zum Aktivieren der fotochromen Reaktion ein UV-Strahlen-Projektionssystem (41, 42, 43, 44) ist, umfassend mehrere UV-Strahlen-Leuchtdioden (41, 42, 43, 44) und optische Steuermittel zum Begrenzen der UV-Strahlen-Projektionszonen und zum Regeln der Belichtungszeit der Zonen mit den UV-Strahlen, wobei die UV-Strahlen-Leuchtdioden am Helm montiert sind.

2. Helm nach Anspruch 1, wobei die Leuchtdioden an der Schale montiert sind.

3. Helm nach einem der vorherigen Ansprüche, **dadurch gekennzeichnet, dass** er auch eine Vorrichtung (23) zum Erkennen der Haltung des Benutzers unter Berechnung von Zustandsinformationen relativ zur Blickrichtung (31) des Benutzers umfasst, um die Informationen zum Regelmittel (22) zum Regeln des Lichttransmissionskoeffizienten von wenigstens der Projektionszone (14) in Abhängigkeit von der Blickrichtung (31) des Benutzers zu übertragen.

4. Helm nach einem der vorherigen Ansprüche, **dadurch gekennzeichnet, dass** er ferner eine manuelle Steuervorrichtung zum Berechnen von Zustandsinformationen in Bezug auf Lichttransmissionspegel umfasst, um die Informationen zu dem Regelmittel (22) zum Regeln des Lichttransmissionskoeffizienten von wenigstens der Projektionszone in Abhängigkeit von einem gewünschten Pegel zu übertragen.

5. Helm nach einem der vorherigen Ansprüche, **dadurch gekennzeichnet, dass** er ferner eine fotoempfindliche Komponente (24) zum Ermitteln von Zustandsinformationen in Bezug auf den Helligkeitspegel des Raums um den optischen Streifen umfasst, um die Informationen zum Regelmittel (22) zum Regeln des Lichttransmissionskoeffizienten von wenigstens der Projektionszone in Abhängigkeit vom Helligkeitspegel zu übertragen.

## Claims

1. A helmet comprising a translucent optical strip (11) covering all or part of the field of vision (3) of the user of said equipment, the strip being a visor, and a device (21) for projecting images onto said strip in at least one zone (14), called image projection zone, of the field of vision of the user, the optical strip comprising a plurality of zones (12, 13, 15) covered by a layer of material with a controlled light transmission coefficient of the photochromic type, a zone at least covering the image projection zone (14), **characterised in that** the vision equipment further comprises means (22) for controlling the light transmission coefficient comprising means for activating the photochromic reaction on at least one zone (46) of the optical strip for controlling the light transmission coefficient of the zone capable of receiving status information (25) and for controlling the light transmission coefficient of each of the zones (12, 13, 15) and independently of each other as a function of said status information, wherein the means for activating the photochromic reaction is an ultraviolet radiation projection system (41, 42, 43, 44) comprising a plurality of ultraviolet radiation light emitting diodes (41, 42, 43, 44) and optical control means for delimiting the ultraviolet radiation projection zones and for controlling the exposure time of said zones to the ultraviolet radiation, the ultraviolet radiation light emitting diodes being mounted on the helmet.

2. The helmet as claimed in claim 1, wherein the light emitting diodes are mounted on the shell.

3. The helmet as claimed in any one of the preceding claims, **characterised in that** it further comprises a device (23) for detecting the posture of the user computing status information relating to the viewing direction (31) of the user, so as to transmit said information to the control means (22) for controlling the light transmission coefficient of at least the projection zone (14) as a function of the viewing direction (31) of the user.

4. The helmet as claimed in any one of the preceding claims, **characterised in that** it further comprises a manual control device computing status information relating to light transmission levels, so as to transmit said information to the control means (22) for controlling the light transmission coefficient of at least the projection zone as a function of a desired level.

5. The helmet as claimed in any one of the preceding claims, **characterised in that** it further comprises a photo-sensitive component (24) determining status information relating to the luminosity level of the space around the optical strip, so as to transmit said information to the control means (22) for controlling the light transmission coefficient of at least the projection zone as a function of the luminosity level.
